# EUROPEAN PATENT APPLICATION

(11) **EP 4 507 097 A1**
(43) Date of publication of application: **12.02.2025**
(21) Application number: 22961661.0
(22) Date of filing: 11.10.2022
(51) Int. Cl.: H01M 50/30, H01M 50/10

(54) **GAS EXHAUSTING DEVICE, BATTERY CELL, BATTERY, AND ELECTRIC DEVICE**

(71) Applicant: Contemporary Amperex Technology (Hong Kong) Limited, Central, Central And Western District (HK)
(72) Inventor: XU, Liangfan, Ningde City, Fujian 352100 (CN); ZHOU, Wenlin, Ningde City, Fujian 352100 (CN); LI, Xing, Ningde City, Fujian 352100 (CN); JIN, Haizu, Ningde City, Fujian 352100 (CN)
(74) Representative: Ran, Handong
(86) International application number: PCT/CN2022/124525
(87) International publication number: WO 2024/077466

(57) **Abstract**

Provided in the present application are a gas exhausting device, a battery cell, a battery and an electric device. The gas exhausting device comprises a gas exhausting body, a first gas-permeable piece and a second gas-permeable piece; the first gas-permeable piece is arranged on the gas exhausting body; the second gas-permeable piece is arranged on the gas exhausting body, and is located on the side of the first gas-permeable piece in the thickness direction of the gas exhausting body; the first gas-permeable piece and the second gas-permeable piece are used for allowing a gas to pass through when the gas pressure in a battery cell reaches a first threshold value. The gas exhausting device provided by the present application helps to reduce the risk of the leakage of electrolytes in the battery cells, and to ensure the normal pressure relief work of the battery cells, thereby helping to improve the safety performance of the battery cells.

## Description

### FIELD

This application relates to the field of battery technologies, and particularly to an exhaust device, a battery cell, a battery, and an electricity-consuming device.

### BACKGROUND

Batteries are widely used in electronic devices such as mobile phones, laptops, battery cars, electric vehicles, electric aircraft, electric ships, electric toy cars, electric toy ships, electric toy aircraft, and electric tools. A battery cell may include a nickel-cadmium battery cell, a nickel-hydrogen battery cell, a lithium-ion battery cell, a secondary alkaline zinc-manganese battery cell, or the like.

In the development of battery cell technology, in addition to improving the operation performance of a battery cell, electrically improving the safety performance of the battery cell is also a non-negligible issue. Therefore, improving the safety performance of the battery cell is a technical issue that needs continuous improvement in battery cell technology.

### SUMMARY

This application provides an exhaust device, a battery cell, a battery, and an electricity-consuming device capable of improving the safety performance of the battery cell.

In a first aspect, an exhaust device provided by the embodiments of this application includes an exhaust body, a first venting member, and a second venting member; the first venting member is disposed on the exhaust body; the second venting member is disposed on the exhaust body and a side of the first venting member in a thickness direction of the exhaust body, and the first venting member and the second venting member are configured to allow gas to pass through when the gas pressure in the battery cell reaches a first threshold.

In the exhaust device provided in the embodiments of this application, in a case where the exhaust device is used in the battery cell, the provision of the first venting member and the second venting member provides dual protection for normal pressure relief of the battery cell. In a case where either of the first venting member and the second venting member is damaged, the other can still maintain the sealing performance inside the battery cell, thus facilitating the reduction of the risk of electrolyte solution leakage inside the battery cell. In addition, in a case where either of the first venting member and the second venting member is damaged, the other can still ensure normal pressure relief operation of the battery cell. As such, it is beneficial to improving the safety performance of the battery cell.

In some embodiments, the first venting member and the second venting member are spaced apart in the thickness direction so that a gas guide channel is formed between the first venting member and the second venting member, and the gas is discharged to an exterior of the battery cell through the gas guide channel.

By providing the first venting member and the second venting member that are spaced apart from each other, a gas guide channel may be formed between the first venting member and the second venting member. In a case where the structures of the first venting member and the second venting member are both intact, when the gas pressure inside the battery cell reaches the first threshold, it is beneficial for the gas to pass through the gas guide channel so that the pressure is exerted on one of the first venting member and the second venting member close to an exterior of the battery cell, thus facilitating the timely gas discharging. Besides, it is beneficial to reducing the risk of certain damage due to the transmission of a load such as an impact and vibration between them, thus facilitating further improvement of the safety performance of the battery cell.

In some embodiments, a distance d between the first venting member and the second venting member in the thickness direction of the exhaust body satisfies a relationship of d≥2mm. As such, the timely opening of the one of the first venting member and the second venting member which is close to an exterior of the battery cell is further facilitated, thus improving the safety performance of the battery cell.

In some embodiments, the second venting member is disposed on a side of the first venting member facing away from an electrode assembly of the battery cell. The exhaust body is provided with a groove recessed toward the electrode assembly on the side facing away from the interior of the battery cell, and at least part of the second venting member is accommodated in the groove. As such, it is beneficial to installation of the second venting member and lowering the height of the second venting member protruding from a surface of the exhaust body, thereby reducing the risk of damage to the second venting member by an external force.

In some embodiments, the second venting member includes a venting body and a connecting member, and the connecting member is sealingly connected to the exhaust body and the venting body. This arrangement facilitates the maintenance of the sealing connection between the second venting member and the exhaust body, thus maintaining the sealing performance inside the battery cell during normal operation.

In some embodiments, the material of the venting body includes fluorine rubber, polypropylene, silicone rubber, ethylene propylene rubber, nitrile rubber, ethylene-propylene-diene monomer rubber, polyurethane rubber, chloroether rubber, or acrylate rubber. As such, it is beneficial to maintaining the structural stability of the second venting member and the sealing connection between the second venting member and the exhaust body, thereby reducing the risk of electrolyte solution leakage.

In some embodiments, the connecting member is in an annular shape, the venting body is in a sheet-like shape, and a peripheral edge of the venting body is pressed by and is sandwiched between the connecting member and the exhaust body. This arrangement facilitates the sealing connection between the venting body and the exhaust body and the maintenance of the sealing performance of the second venting member within the battery cell during normal operation.

In some embodiments, the venting body includes a body region and a deformation region which is disposed around a periphery of the body region and is sandwiched between the connecting member and the exhaust body. The deformation region is configured to deform relative to the body region under a pressure of the connecting member and the exhaust body so that the venting body is sealingly connected to the exhaust body. With this arrangement, the deformation of the deformation region relative to the body region realizes a sealing connection between the venting body and the exhaust body, thus facilitating the simplification of the structure of the exhaust device while ensuring the sealing performance between the exhaust body and the second venting member.

In some embodiments, the exhaust body includes a through hole extending in the thickness direction, the through hole is communicated with an interior of the battery cell, and the first venting member covers the through hole through which the gas is discharged to an exterior of the battery cell. By providing the exhaust body that is provided with a through hole in the thickness direction, when the gas pressure inside the battery cell reaches the first threshold, the first venting member and the second venting member are disconnected from the exhaust body or are blown open, and the gas is discharged to an exterior of the battery cell through the through hole.

In some embodiments, the second venting member covers the through hole and is spaced apart from the first venting member so that a gas guide channel is formed between the first venting member and the second venting member, and the gas is discharged to the exterior of the battery cell through the gas guide channel.

By providing a gas guide channel between the first venting member and the second venting member, when the internal pressure of the battery cell reaches the first threshold, the first venting member and the second venting member can be opened timely, thus facilitating the improvement of the exhaust smoothness of the first venting member and the second venting member, thereby reducing the risk of hindering the relief pressure of the battery, which is caused by the fact that one of the first venting member and the second venting member facing away from the electrode assembly fails to open, when the internal pressure of the battery cell reaches the first threshold. Alternatively, in a case where one of the first venting member and the second venting member is subjected to a load such as an impact or vibration, the risk of damage to the other due to the transmission of a load such as an impact and vibration between them is reduced.

In some embodiments, the through hole includes a first subsection, a second subsection, and a third subsection arranged in sequence in the thickness direction away from an electrode assembly of the battery cell, a first step surface for connecting the first subsection and the second subsection, and a second step surface for connecting the second subsection and the third subsection, and at least part of the second venting member is accommodated in the third subsection. As such, it is beneficial for the first venting member and the second venting member to be connected in the through hole and for a gas guide channel to be formed between the first venting member and the second venting member.

In some embodiments, at least part of the first venting member is accommodated in the first subsection, and the gas guide channel is disposed between the first venting member and the second venting member. As such, it is beneficial to realizing a spaced arrangement of the first venting member from the second venting member so as to form a gas guide channel between them.

In some embodiments, the first venting member is disposed on the first step surface and spaced apart from the second venting member so that the gas guide channel is formed between the first venting member and the second venting member. The disposition of the first venting member on the second step surface facilitates the connection between the first venting member and the exhaust body, and by accommodating the first venting member in the second subsection, the arrangement of the first venting member spaced apart from an internal structural member of the battery cell can be realized using the first subsection, thus reducing the risk of damage to the first venting member by the internal structural member of the battery cell due to a load such as an impact and vibration. Besides, in the presence of the first subsection, the first venting member and electrolyte solution inside the battery cell can be spaced apart, thereby reducing the risk of damage to the first venting member by the electrolyte solution due to contact with the first venting member.

In some embodiments, the exhaust device further includes a supporting member and a sealing member, the supporting member abuts against a side of the second venting member facing the first venting member, and the sealing member abuts against and is sandwiched between the supporting member and the first step surface. Supporting the second venting member by the supporting member reduces the risk of contact between the second venting member and the first venting member due to the deformation and the risk of a failed sealing connection between the second venting member and the exhaust body due to the deformation. By providing the sealing member that abuts against and is sandwiched between the supporting member and the first step surface, it is beneficial for the realization of a sealing connection between the supporting member and the exhaust body so as to realize a sealing connection between the second venting member and the exhaust body.

In some embodiments, the supporting member is in a sheet-like shape and covers an end of the second venting member facing the first venting member. By providing the supporting member that is in a sheet-like shape, it is beneficial for the reduction of the volume occupied by the supporting member, especially a space in the thickness direction within the through hole occupied by the supporting member. By providing the supporting member that covers an end of the second venting member facing the first venting member, it is beneficial to providing effective support for the second venting member by the supporting member, thus improving the supporting effect on the second venting member.

In some embodiments, the through hole further includes a fourth subsection and a third step surface for connecting the third subsection and the fourth subsection, and a size of the fourth subsection is larger than a size of the third subsection in a direction perpendicular to the thickness direction; the second venting member includes a venting body and a connecting member which is in an annular shape, a peripheral edge of the venting body is sealingly connected between the connecting member and the second step surface, and the connecting member abuts against the third step surface and is at least partially accommodated in the fourth subsection.

By providing the through hole that includes a fourth subsection and a third step surface, it is beneficial for the provision of a connecting member using the fourth step surface, thus improving the connection stability between the connecting member and the exhaust body. Accommodating at least part of the connecting member in the fourth subsection facilitates lowering the height of the connecting member protruding from the exhaust body, thereby reducing the risk of a failed connection between the connecting member and the exhaust body due to scratch.

In some embodiments, the venting body includes a body region and a deformation region which is disposed around a periphery of the body region, the deformation region is sandwiched between the connecting member and the second step surface, the connecting member abuts against the third step surface, and the deformation region is configured to be compressed and deformed relative to the body region so that the venting body is sealingly connected to the exhaust body. As such, it is beneficial to realizing a sealing connection between the second venting member and the exhaust body by the deformation of the deformation region and improving the structural stability of the deformation region, thus further improving the connection stability between the second venting member and the exhaust body.

In some embodiments, any two surfaces among a surface of the connecting member facing away from the first venting member, a surface of the body region facing away from the first venting member, and a surface of the exhaust body facing away from the electrode assembly of the battery cell are flush with each other. Such arrangement facilitates the improvement of the flatness of a surface on a side of the exhaust body and the first venting member facing away from the electrode assembly after the first venting member is connected to the exhaust body, thus reducing the risk of damage to the first venting member or the exhaust body due to scratch so the safety performance of the battery cell is further improved.

In a second aspect, a battery cell provided by the embodiments of this application includes a casing, an electrode assembly, an end cover and an exhaust device provided by the embodiments of the first aspect; the casing has an opening; the electrode assembly is accommodated in the casing; the end cover covers and encloses the opening of the casing; the exhaust device is disposed on the casing or on the end cover.

The battery cell provided according to the embodiments of this application uses the exhaust device provided in any one of the above embodiments and thus has the same technical effect, which will not be repeated herein.

In a third aspect, the embodiments of this application provide a battery including the battery cell provided in the embodiments of the second aspect.

The battery provided according to the embodiments of this application uses the battery cell provided in the above embodiments and thus has the same technical effect, which will not be repeated herein.

In a fourth aspect, the embodiments of this application provide an electricity-consuming device including a battery in the embodiments of the third aspect, which is configured to provide electric energy.

The electricity-consuming device provided according to the embodiments of this application uses the battery provided by the embodiments of this application and thus has the same technical effect, which will not be repeated herein.

### BRIEF DESCRIPTION OF THE DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and a person with ordinary skills in the art may still derive other drawings from the accompanying drawings without creative efforts.
Fig. 1 is a structural schematic diagram of a vehicle provided by an embodiment of this application;
Fig. 2 is an exploded schematic diagram of a battery provided by an embodiment of this application;
Fig. 3 is a structural schematic diagram of a battery module in a battery provided by an embodiment of this application;
Fig. 4 is an exploded schematic diagram of a battery cell provided by an embodiment of this application;
Fig. 5 is a front view of an exhaust device provided by an embodiment of this application;
Fig. 6 is a cross-sectional structural schematic diagram along a line A-A in Fig. 5;
Fig. 7 is another cross-sectional structural schematic diagram along a line A-A in Fig. 5;
Fig. 8 is another front view of an exhaust device provided by an embodiment of this application;
Fig. 9 is a cross-sectional structural schematic diagram along a line A-A in Fig. 8;
Fig. 10 is yet another cross-sectional structural schematic diagram along a line A-A in Fig. 5;
Fig. 11 is still another cross-sectional structural schematic diagram along a line A-A in Fig. 5;
Fig. 12 is yet another cross-sectional structural schematic diagram along a line A-A in Fig. 5;
Fig. 13 is yet another cross-sectional structural schematic diagram along a line B-B in Fig. 8;
Fig. 14 is a partial enlarged view of a portion C in Fig. 13.

In the drawings, the drawings are not drawn to actual scale.

Explanation of reference signs:
1. vehicle; 1a, motor; 1b, controller;
10. battery; 11. first box portion; 12. second box portion;
20. battery module;
30. battery cell; 31. housing; 311. casing; 311a. opening; 312. end cover; 32. electrode assembly; 40. exhaust device; 41. exhaust body; 41a, groove; 41b, gas guide channel; 411, through hole, 411a, first subsection; 411b, second subsection; 411c, third subsection; 411d, fourth subsection; 411e, first step surface; 411f, second step surface; 411g, third step surface; 42, first venting member; 43. second venting member; 431. venting body; 431a, body region; 431b, deformation region; 432, connecting member; 44. supporting member; 45. sealing member;
X, thickness direction.

### DETAILED DESCRIPTION

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by a person with ordinary skills in the art based on the embodiments of this application without creative efforts shall fall within the protection scope of this application.

Unless otherwise defined, all technical and scientific terms used in this application shall have the same meanings as commonly understood by a person with ordinary skills in the art to which this application relates. The terms used in the specification of this application are intended to merely describe the specific embodiments rather than to limit this application. The terms "include", "include", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

In this application, reference to "embodiment" means that specific features, structures, or characteristics described in conjunction with the embodiments may be included in at least one embodiment of this application. This word appearing in various places in the description does not necessarily refer to the same embodiment or an independent or alternative embodiment exclusive to other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. A person with ordinary skills in the art can understand specific meanings of these terms in this application as appropriate to specific situations.

The term "and/or" in this application is only an associative relationship for describing associated objects, indicating that three relationships may be present. For example, C and/or D may indicate three cases: the presence of only C; the presence of both C and D; and the presence of only D. In addition, the character "/" in this application generally indicates an "or" relationship between contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of an integrated device in the embodiments of this application are merely for illustrative purposes and should not constitute any limitations on this application.

In this application, "a plurality of" means more than two (inclusive).

In this application, the battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like, which is not limited in the embodiments of this application. The battery cell may be in a cylindrical, flat, cuboid, or another shape, which is not limited in the embodiments of this application either. Battery cells are typically classified into three types by a packaging method: cylindrical cells, prismatic cells, and pouch cells, which are also not limited in the embodiments of this application.

The battery mentioned in the embodiments of this application is a single physical module that includes one or more battery cells for providing a high voltage and capacity. For example, the battery mentioned in this application may include a battery module, a battery pack, or the like. A battery typically includes a box configured to enclose one or more battery cells. The box can prevent liquids or other foreign matters from affecting the charging or discharging of the battery cell.

The battery cell includes an electrode assembly and electrolyte solution. The electrode assembly includes a positive electrode plate, a negative electrode plate, and a separator. The operation of the battery cell mainly relies on the migration of metal ions between the positive electrode plate and the negative electrode plate. The positive electrode plate includes a positive electrode current collector and a positive electrode active substance layer. The positive electrode active substance layer is applied on a surface of the positive electrode current collector. The positive electrode current collector includes a positive electrode current collecting portion and a positive electrode protrusion which protrudes from the positive electrode current collecting portion. The positive electrode active substance layer is applied on the positive electrode current collecting portion and is not applied on at least part of the positive electrode protrusion. The positive electrode protrusion serves as a positive electrode tab. Taking a lithium-ion battery as an example, the positive electrode current collector may be made of aluminum. The positive electrode active substance layer includes a positive electrode active substance which may be lithium cobaltate, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The negative electrode current collector includes a negative electrode current collecting portion and a negative electrode protrusion which protrudes from the negative electrode current collecting portion. The negative electrode active substance layer is applied on the negative electrode current collecting portion and is not applied on at least part of the negative electrode protrusion. The negative electrode protrusion serves as a negative electrode tab. The negative electrode current collector may be made of copper. The negative electrode active substance layer may include negative electrode active substance which may be carbon, silicon, or the like. To ensure that a large current passes through without any fusing, a plurality of positive electrode tabs are provided and stacked, and a plurality of negative electrode tabs are provided and stacked. The separator may be made of PP (polypropylene), PE (polyethylene), or the like. **In** addition, the electrode assembly may have a winding structure or a laminated structure, but the embodiments of this application are not limited thereto.

In the battery cell, after many charge and discharge cycles, there are side reactions, and the gas is continuously generated so that a certain gas pressure is inside of the battery cell. As the gas pressure increases, the gas between the electrode plates cannot be timely discharged, which will affect the intercalation and deintercalation of lithium-ions and lead to the risk of lithium precipitation. In order to ensure the safety of the battery cell, an exhaust device is generally provided in the battery cell, and the gas generated from the inside of the battery cell is exhausted through the exhaust device so as to ensure the safety of the battery cell.

The inventors found a problem of electrolyte solution leakage in a battery cell and conducted systematic analysis and research on the structure and operation environment of the battery cell. It was found that when a battery cell is provided with an exhaust device, the electrolyte solution inside the battery cell would cause certain corrosion to a venting member of the exhaust device as the circulation operation time of the battery cell increases, or the venting member would be ruptured under an external load when the battery cell is subjected to a load such as an impact and vibration. All of the above situations would cause damage to the venting member structure, thus leading to a problem of electrolyte solution leakage inside the battery cell, which seriously affects the safety performance of the battery cell.

In view of the above problem found by the inventors, the inventors have improved the mechanism of the exhaust device of the battery cell. The technical solution described in the embodiments of this application is applicable to an exhaust device, a battery cell including an exhaust device, a battery including a battery cell, and an electricity-consuming device using a battery.

An exhaust device provided according to the embodiments of this application is used for a battery cell and includes an exhaust body, a first venting member, and a second venting member. The first venting member is disposed on the exhaust body, and the second venting member is disposed on the exhaust body. The second venting member is disposed on a side of the first venting member in a thickness direction of the exhaust body. The first venting member and the second venting member are configured to allow gas to pass through when the gas pressure in the battery cell reaches a first threshold.

In the exhaust device provided by the embodiments of this application, a first venting member and a second venting member are provided, and the second venting member is positioned on a side of the first venting member in the thickness direction of the exhaust body. When either of the first venting member and the second venting member is damaged, the other can continue performing normal exhaust and pressure relief operations for the battery cell, thus reducing the risk of electrolyte solution leakage of the battery cell so the improvement of the safety performance of the battery cell is facilitated.

The electricity-consuming devices may be vehicles, mobile phones, portable devices, notebook computers, ships, spacecraft, electric toys, electric tools, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, an electric toy airplane, and the like. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric device.

For ease of description, a description is made by taking a vehicle as an example of an electricity-consuming device.

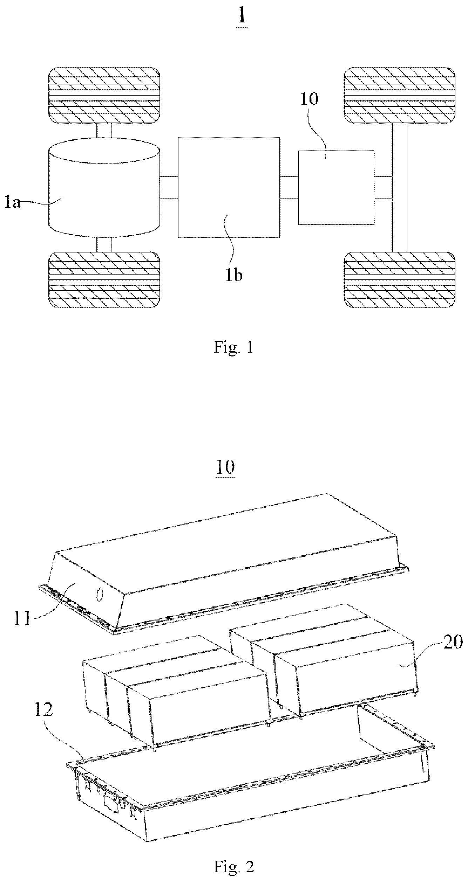

As shown in Fig. 1, a vehicle 1 is provided with a battery 10 inside. The battery 10 may be disposed at the bottom, the front, or the rear of the vehicle 1. The battery 10 may be configured to supply power to the vehicle 1. For example, the battery 10 may be used as an operational power source for the vehicle 1.

The vehicle 1 may further include a controller 1b and a motor 1a. The controller 1b is configured to control the battery 10 to supply power to the motor 1a, for example, to satisfy the power needs of start, navigation, and driving of the vehicle 1.

In some embodiments of this application, the battery 10 can be used as not only the operational power source for the vehicle 1 but also a driving power source for the vehicle 1, replacing or partially replacing fossil fuel or natural gas to provide driving traction for the vehicle 1.

As shown in Fig. 2, the battery 10 includes a battery cell (not shown in Fig. 2). The battery 10 may also include a box for accommodating the battery cell.

The box is configured to accommodate the battery cell and may have various structures. In some embodiments, the box may include a first box portion 11 and a second box portion 12. The first box portion 11 and the second box portion 12 fits together to jointly define an accommodating space for accommodating the battery cell. The second box portion 12 may have a hollow structure with one end open, and the first box portion 11 may have a plate-like structure. The first box portion 11 covers and encloses the open side of the second box portion 12 so as to form a box having an accommodating space. Alternatively, each of the first box portion 11 and the second box portion 12 may have a hollow structure with one side open. The open side of the first box portion 11 fits over and encloses the open side of the second box portion 12 so as to form a box having an accommodating space. Certainly, the first box portion 11 and the second box portion 12 may be in various shapes, for example, cuboid, cylinder, or the like.

To improve the sealing performance after the first box portion 11 and the second box portion 12 are connected, a sealing member such as a sealant and a sealing ring may be disposed between the first box portion 11 and the second box portion 12.

Assuming that the first box portion 11 covers and encloses the second box portion 12, the first box portion 11 can also be referred to as an upper box cover, and the second box portion 12 can also be referred to as a lower box.

In the battery 10, one or more battery cells may be provided. If a plurality of battery cells are provided, the plurality of battery cells may be connected in series, parallel, or hybrid. Being connected in hybrid means a combination of series and parallel connections of the plurality of battery cells. The plurality of battery cells may be directly connected in series, parallel, or hybrid and then may be accommodated in the box as a whole. Alternatively, the plurality of battery cells may be connected in series, parallel, or hybrid first to form a battery module 20. Then, the plurality of battery modules 20 are connected in series, parallel, or hybrid to form an entirety which is accommodated in the box.

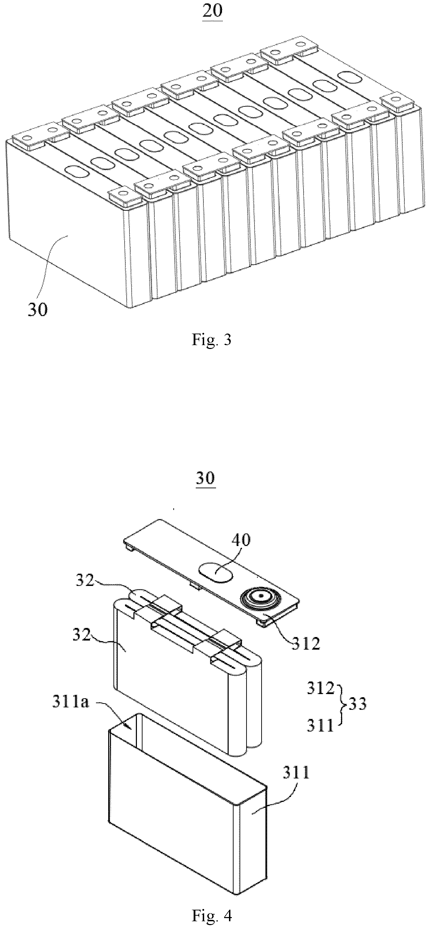

In some embodiments, as shown in Fig. 3, Fig. 3 is a schematic structural diagram of the battery module 20 shown in Fig. 2. In the battery module 20, a plurality of battery cells 30 are provided. The plurality of battery cells 30 are connected in series, parallel, or hybrid first to form a battery module 20. Then, the plurality of battery modules 20 are connected in series, parallel, or hybrid to form an entirety which is accommodated in the box.

In some embodiments, the plurality of battery cells 30 in the battery module 20 may be electrically connected through a bus component so as to realize that the plurality of battery cells 30 in the battery module 20 are connected in parallel, series, or hybrid.

Please refer to Fig. 4, which is an exploded schematic diagram of the battery cell 30 shown in Fig. 3. The battery cell 30 provided in the embodiments of this application includes an electrode assembly 32 and a housing 31. The housing 31 has an accommodating cavity in which the electrode assembly 32 is accommodated.

In some embodiments, the housing 31 may include a casing 311 and an end cover 312. The casing 311 have a hollow structure with one side open. The end cover 312 covers an opening 311a of the casing 311 to form a sealing connection and thus a sealing space for accommodating the electrode assembly 32 and the electrolyte.

During the assembling of the battery cell 30, the electrode assembly 32 is put into the casing 311 first, the opening 311a of the casing 311 is covered and enclosed by the end cover 312, and then the electrolyte is injected into the casing 311 through an electrolyte injection port on the end cover 312.

In some embodiments, the housing 31 may be configured to accommodate the electrolyte such as electrolyte solution. The housing 31 may have various structures.

The casing 311 may be in various shapes, such as cylinder and cuboid. The shape of the casing 311 can be determined according to the specific shape of the electrode assembly 32. For example, if the electrode assembly 32 have a cylindrical structure, the casing 311 may have a cylindrical structure. If the electrode assembly 32 have a cuboid structure, the casing 311 may have a cuboid structure. In Fig. 4, for example, the casing 311 and the electrode assembly 32 have both cuboid structures.

The casing 311 may be made of various materials such as copper, iron, aluminum, steel, and aluminum alloy, which are not particularly limited in the embodiments of this application.

One or more electrode assemblies 32 are accommodated in the casing 311. In Fig. 4, two electrode assemblies 32 are accommodated in the casing 311.

As shown in Figs. 4, 5, and 7, an exhaust device 40 provided according to the embodiments of this application is used in the battery cell 30. The exhaust device 40 includes an exhaust body 41, a first venting member 42, and a second venting member 43. The first venting member 42 is disposed on the exhaust body 41, and the second venting member 43 is disposed on the exhaust body 41. The second venting member 43 is disposed on a side of the first venting member 42 in a thickness direction X of the exhaust body 41. The first venting member 42 and the second venting member 43 are configured to allow gas to pass through when the gas pressure inside the battery cell 30 reaches a first threshold.

Optionally, the exhaust device 40 may be part of the casing 311 or the end cover 312 of the battery cell 30.

Optionally, the first venting member 42 may be integrally formed with the exhaust body 41 or may be separately processed and then mounted on the exhaust body 41. On the same principle, the second venting member 43 may be integrally formed with the exhaust body 41 or may be separately processed and then mounted on the exhaust body 41.

It is provided that the first venting member 42 may be disposed on a side of the second venting member 43 close to or facing away from the electrode assembly 32. In a case where the first venting member 42 is positioned on a side of the second venting member 43 close to the electrode assembly 32, the first venting member 42 may be disposed at an end of the exhaust body 41 close to the electrode assembly 32 or may be positioned inside the exhaust body 41. The second venting member 43 may be disposed at an end of the exhaust body 41 facing away from the electrode assembly 32, or the first venting member 42 may be positioned inside the exhaust body 41. The specific selection can be made according to actual needs.

In the embodiments in which the exhaust device 40 is used in the battery cell 30, during normal operation of the battery cell 30, the first venting member 42 and the second venting member 43 maintain the sealing performance inside the battery cell 30 to enable normal operation of the battery cell 30. After either of the first venting member 42 and the second venting member 43 is damaged, the other can still maintain the sealing performance inside the battery cell 30, thus still ensuring normal operation of the battery cell 30 after either of the first venting member 42 and the second venting member 43 is damaged.

When the internal gas pressure of the battery cell 30 reaches the first threshold, the first venting member 42 and the second venting member 43 are blown open. For example, the first venting member 42 or the second venting member 43 is ruptured or disconnected from the exhaust body 41. As such, the exhaust body 41 is formed with an exhaust channel through which the gas inside the battery cell 30 can be discharged to the exterior of the battery cell 30, thereby realizing normal pressure relief of the battery cell 30.

During normal operation of the battery cell 30, the first venting member 42 and the second venting member 43 can both be sealingly connected to the exhaust body 41, thus still ensuring the maintenance of the sealing performance within the battery cell 30 after either structure of them is damaged.

The relief pressures of the first venting member 42 and the second venting member 43 are the same, and the pressure can be normally released when the gas pressure inside the battery cell 30 reaches the first threshold. When either of the first venting member 42 and the second venting member 43 is damaged, the gas pressure can be normally released by the other when the gas pressure inside the battery cell 30 reaches the first threshold.

The material of the first venting member 42 and the second venting member 43 is not limited. For example, the first venting member 42 and the second venting member 43 may be made of silicone rubber, ethylene-propylene rubber, nitrile rubber, ethylene-propylene-diene monomer rubber, polyurethane rubber, chloroether rubber, straight acrylic rubber, fluorine rubber, polypropylene, or the like. The specific selection can be made according to actual needs.

Optionally, in the thickness direction X, the first venting member 42 and the second venting member 43 may be disposed adjacent to each other or may be spaced apart.

In a case where one of the first venting member 42 and the second venting member 43 is damaged due to vibration or an impact or due to corrosion by the electrolyte solution, when the gas pressure inside the battery cell 30 reaches the first threshold, normal pressure relief of the battery cell 30 can still be realized by the other. In a case where the first venting member 42 and the second venting member 43 are both intact, when the gas pressure inside the battery cell 30 reaches the first threshold, the first venting member 42 and the second venting member 43 are opened simultaneously to allow the gas inside the battery cell 30 to pass through.

In the exhaust device 40 provided in the embodiments of this application, in a case where the exhaust device 40 is used in the battery cell 30, the provision of the first venting member 42 and the second venting member 43 provides dual protection for normal pressure relief of the battery cell 30. In a case where either of the first venting member 42 and the second venting member 43 is damaged, the other can still maintain the sealing performance inside the battery cell 30, thus facilitating the reduction of the risk of electrolyte solution leakage inside the battery cell 30. In addition, in a case where either of the first venting member 42 and the second venting member 43 is damaged, the other can still ensure normal pressure relief operation of the battery cell 30. As such, it is beneficial to improving the safety performance of the battery cell 30.

In some embodiments, in the thickness direction X of the exhaust body 41, the first venting member 42 and the second venting member 43 are spaced apart so that a gas guide channel 41b is formed between the first venting member 42 and the second venting member 43, and the gas is discharged to the exterior of the battery cell 30 through the gas guide channel 41b.

As such, in a case where the structures of the first venting member 42 and the second venting member 43 are both intact, when the gas pressure inside the battery cell 30 reaches the first threshold, the one of the first venting member 42 and the second venting member 43 which is close to the electrode assembly 32, for example, the first venting member 42, is opened first. The gas passes through the gas guide channel 41b via the first venting member 42. The gas pressure is exerted on the other, for example, the second venting member 43 so the second venting member 43 is opened timely, thus facilitating the discharging of the gas to the exterior of the battery cell 30 through the second venting member 43.

In addition, in a case where one of the first venting member 42 and the second venting member 43, such as one facing away from the electrode assembly 32 of the battery cell 30, is subjected to a load such as an impact and vibration, since the first venting member 42 and the second venting member 43 are spaced apart, the risk of damage to the other due to the transmission of a load such as an impact and vibration between them is reduced, thus facilitating the improvement of the structural integrity of the first venting member 42 and the second venting member 43.

Therefore, by providing the first venting member 42 and the second venting member 43 that are spaced apart from each other, a gas guide channel 41b can be formed between the first venting member 42 and the second venting member 43. In a case where the structures of the first venting member 42 and the second venting member 43 are both intact, when the gas pressure inside the battery cell 30 reaches the first threshold, it is beneficial for the gas to pass through the gas guide channel 41b so that the pressure is exerted on one of the first venting member 42 and the second venting member 43 close to the exterior of the battery cell 30, thus facilitating the timely gas discharging. It is beneficial to reducing the risk of certain damage due to the transmission of a load such as an impact and vibration between them, thus facilitating further improvement of the safety performance of the battery cell 30.

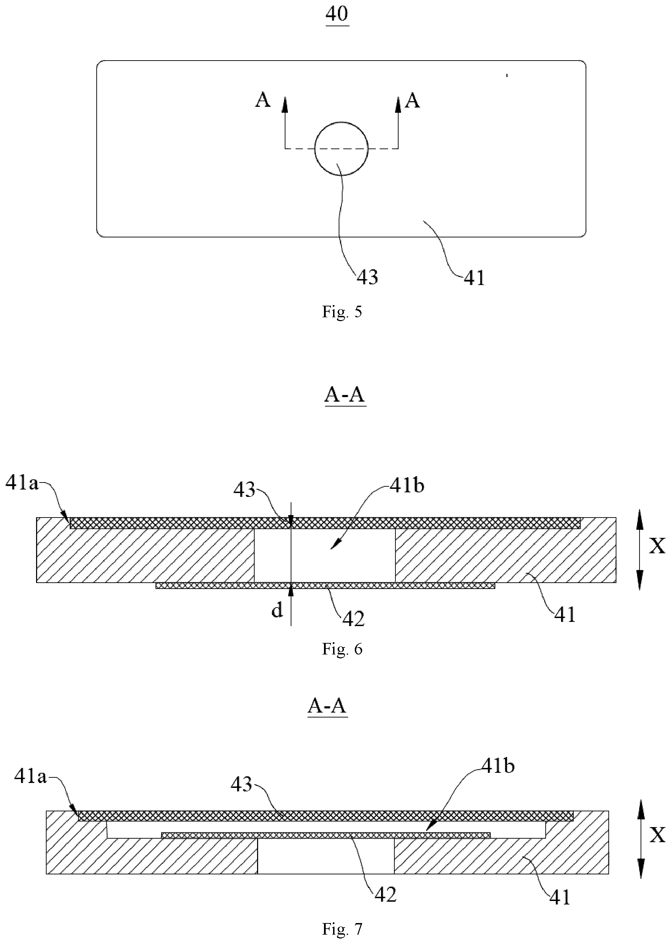

As shown in Fig. 6, in some embodiments, in the thickness direction X of the exhaust body 41, a distance d between the first venting member 42 and the second venting member 43 satisfies a relationship of d≥2mm.

For example, the distance between the first venting member 42 and the second venting member 43 may be 2mm, 3mm, 4mm, 5mm, or the like.

After in-depth research and extensive experiments of the inventors, it is provided that the distance between the first venting member 42 and the second venting member 43 is d≥2mm, further facilitating the timely opening of the one of the first venting member 42 and the second venting member 43 which is close to the exterior of the battery cell 30, thus improving the safety performance of the battery cell 30.

As shown in Figs. 5, 6, and 7, in some embodiments, the second venting member 43 is disposed on a side of the first venting member 42 facing away from the electrode assembly 32 of the battery cell 30. The exhaust body 41 is provided with a groove 41a recessed toward the electrode assembly 32 on the side facing away from the interior of the battery cell 30, and at least part of the second venting member 43 is accommodated in the groove 41a.

As such, the disposition of the second venting member 43 on a side of the exhaust body 41 facilitates the installation of the second venting member 43, and accommodation of at least part of the second venting member 43 in the groove 41a lowers the height of the second venting member 43 protruding from a surface of the exhaust body 41, thereby reducing the risk of damage to the second venting member 43 due to an external force.

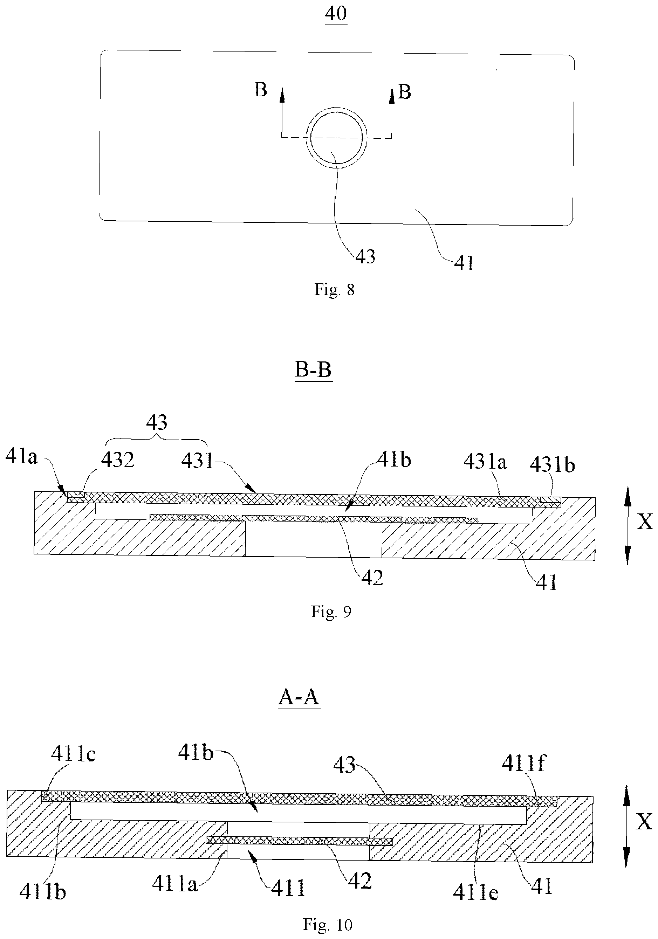

As shown in Figs. 8 and 9, in some embodiments, the second venting member 43 includes a venting body 431 and a connecting member 432, and the connecting member 432 is sealingly connected to the exhaust body 41 and the venting body 431.

The connecting member 432 is configured to connect the venting body 431 to the exhaust body 41. The connecting member 432 may be connected to the exhaust body 41 through welding, screwing, riveting, or the like, and the venting body 431 may be sandwiched between the exhaust body 41 and the connecting member 432 to realize a sealing connection between the venting body 431 and the exhaust body 41.

Optionally, the sealing performance of the connection between the venting body 431 and the exhaust body 41 can be maintained by the deformation of the venting body, or a sealing ring or the like abutting against the venting body 431 is provided to realize the sealing performance of the connection between the venting body 431 and the exhaust body 41, thus reducing a possibility of the gas to pass through a gap between the venting body 431 and the exhaust body 41 during normal operation of the battery cell 30.

It can be understood that the connecting member 432 and the exhaust body 41 can have appropriate connection strength, such as welding strength or threaded connection strength so that when the gas pressure inside the battery cell 30 reaches the first threshold, the connecting member 432 is disconnected from the exhaust body 41 to realize normal pressure relief of the battery cell 30.

Therefore, by providing the second venting member 43 that includes the venting body 431 and the connecting member 432 and the connecting member 432 that is sealingly connected to the exhaust body 41 and the venting body 431, the sealing connection between the second venting member 43 and the exhaust body 41 is maintained, thus maintaining the sealing performance inside the battery cell 30 during normal operation of the battery cell 30.

In some embodiments, the material of the venting body 431 includes fluorine rubber, polypropylene, silicone rubber, ethylene propylene rubber, nitrile rubber, ethylene-propylene-diene monomer rubber, polyurethane rubber, chloroether rubber, or acrylate rubber.

It can be understood that fluorine rubber, polypropylene, silicone rubber, ethylene propylene rubber, nitrile rubber, ethylene-propylene-diene monomer rubber, polyurethane rubber, chloroether rubber, and acrylate rubber have certain structural strength, thus facilitating the maintenance of the structural stability of the venting body 431 when the battery cell 30 is subjected to a load such as an impact and vibration. In addition, fluorine rubber, polypropylene, silicone rubber, ethylene propylene rubber, nitrile rubber, ethylene-propylene-diene monomer rubber, polyurethane rubber, chloroether rubber, or acrylate rubber has a low elastic modulus. In a case where the venting body 431 is sandwiched between the connecting member 432 and the exhaust body 41, a sealing connection between the venting body 431 and the exhaust body 41 is realized by the deformation of the venting body 431, thus facilitating the maintenance of the sealing connection between the second venting member 43 and the exhaust body 41, thereby further reducing the risk of electrolyte solution leakage.

Therefore, by providing the material of the venting body 431 that includes fluorine rubber, polypropylene, silicone rubber, ethylene propylene rubber, nitrile rubber, ethylene-propylene-diene monomer rubber, polyurethane rubber, chloroether rubber, or acrylate rubber, it is beneficial for the maintenance of the structural stability of the second venting member 43 and the sealing connection between the second venting member 43 and the exhaust body 41, thereby reducing the risk of electrolyte solution leakage.

In some embodiments, the connecting member 432 is in an annular shape, the venting body 431 is in a sheet-like shape, and a peripheral edge of the venting body 431 is pressed by and sandwiched between the connecting member 432 and the exhaust body 41.

The peripheral edge of the venting body 431 can extend a certain distance inward from a peripheral side of the venting body 431 to form a sealing interface between the venting body 431 and the exhaust body 41.

Optionally, the connecting member 432 may be in a circular ring shape or a "race-track" annular shape and may be specifically configured according to the shape of the exhaust body 41.

In a case where the peripheral edge of the venting body 431 is pressed by and sandwich between the connecting member 432 and the exhaust body 41, the connection force between the connecting member 432 and the exhaust body 41 can be used to exert pressure on the venting body 431 so as to deform the venting body 431, thus realizing a sealing connection between the venting body 431 and the exhaust body 41. Alternatively, an annular sealing ring is provided beween the venting body 431 and the exhaust body 41 to abut against them, so that a sealing connection between the venting body 431 and the exhaust body 41 is realized.

Therefore, by providing the connecting member 432 that is in an annular shape, the venting body 431 that is in a sheet-like shape, and a peripheral edge of the venting body 431 that is pressed by and is sandwiched between the connecting member 432 and the exhaust body 41, it is beneficial for the sealing connection between the venting body 431 and the exhaust body 41 and thus the maintenance of the sealing performance of the second venting member 43 inside the battery cell 30 during normal operation of the battery cell 30.

Please continue to refer to Figs. 8 and 9. In some embodiments, the venting body 431 includes a body region 431a and a deformation region 431b which is disposed around a periphery of the body region 431a. The deformation region 431b is sandwiched between the connecting member 432 and the exhaust body 41 and is configured to deform relative to the body region 431a under pressure of the connecting member 432 and the exhaust body 41 so that the venting body 431 is sealingly connected to the exhaust body 41.

Before installation, the venting body 431 may have a flat surface. During installation, the deformation region 431b deforms under resultant pressure of the connecting member 432 and the exhaust body 41, abuts against and is sandwiched between the exhaust body 41 and the connecting members 432 so as to form a sealing interface between the exhaust body 41 and the venting body 431.

With this arrangement, the deformation of the deformation region 431b relative to the body region 431a realizes a sealing connection between the venting body 431 and the exhaust body 41, thus facilitating the simplification of the structure of the exhaust device 40 while ensuring the sealing performance between the exhaust body 41 and the second venting member 43.

As shown in Figs. 8, 10, and 11, in some embodiments, the exhaust body 41 has a through hole 411 extending in the thickness direction X. The through hole 411 is communicated with an interior of the battery cell 30, and the first venting member 42 covers the through hole 411 through which the gas can be discharged to the exterior of the battery cell 30.

Optionally, an inner wall of the through hole 411 may be a straight wall in the thickness direction X, or a step is disposed on the inner wall of the through hole 411, thus facilitating the disposition of the first venting member 42 or the second venting member 43.

Optionally, an axial direction of the through hole 411 may be parallel to the thickness direction X of the exhaust body 41, or it is provided that the through hole 411 may be inclined relative to the thickness direction X of the exhaust body 41.

By providing the first venting member 42 that covers the through hole 411, a projection of the first venting member 42 along the axial direction of the through hole 411 covers a projection of the through hole 411 along its axial direction. Optionally, the first venting member 42 may be positioned inside the through hole 411, as shown in Fig. 10; or the first venting member 42 may be disposed at an end of the through hole 411.

Optionally, it is provided that the second venting member 43 may also cover the through hole 411.

It can be understood that by providing a through hole 411 that extends along the thickness direction X of the exhaust body 41, when gas pressure inside the battery cell 30 reaches the first threshold, the first venting member 42 and the second venting member 43 are disconnected from the exhaust body 41 or are blown open, and the gas is discharged to the exterior of the battery cell 30 through the through hole 411.

In some embodiments, the second venting member 43 covers the through hole 411 and is spaced apart from the first venting member 42 so as to form a gas guide channel 41b between the first venting member 42 and the second venting member 43, and the gas is discharged to the exterior of the battery cell 30 through the gas guide channel 41b.

By providing the second venting member 43 that covers the through hole 411, a projection of the second venting member 43 in the axial direction of the through hole 411 covers the through hole 411. Optionally, the second venting member 43 may be positioned inside the through hole 411 or at an end of the through hole 411.

By providing a gas guide channel 41b between the first venting member 42 and the second venting member 43, when the internal pressure of the battery cell 30 reaches the first threshold, the first venting member 42 and the second venting member 43 can be opened timely, thus facilitating the improvement of the exhaust smoothness of the first venting member 42 and the second venting member 43, thereby reducing the risk of hindering the relief pressure of the battery 10, which is caused by the fact that one of the first venting member 42 and the second venting member 43 facing away from the electrode assembly 32 fails to open, when the internal pressure of the battery cell 30 reaches the first threshold. Alternatively, in a case where one of the first venting member 42 and the second venting member 43 is subjected to a load such as an impact or vibration, the risk of damage to the other due to the transmission of a load such as an impact and vibration between them is reduced.

As shown in Figs. 8, 10, and 11, in some embodiments, the through hole 411 includes a first subsection 411a, a second subsection 411a, and a third subsection 411c which are arranged in sequence in the thickness direction facing away from an electrode assembly 32 of the battery cell 30, a first step surface 411e for connecting the first subsection 411a and the second subsection 411b, and a second step surface 411f for connecting the second subsection 411b and the third subsection 411c, and at least part of the second venting member 43 is accommodated in the third subsection 411c.

As such, the second venting member 43 is positioned on a side of the first venting member 42 facing away from the electrode assembly 32, at least part of the second venting member 43 is accommodated in the third subsection 411c, and the second venting member 43 may be disposed on the second step surface 411f, or the second venting member 43 is positioned in the third through hole 411 and is spaced apart from the second tire section.

The first venting member 42 may be disposed at an end of the first subsection 411a close to the electrode assembly 32 or is positioned in a middle region of the first subsection 411a. Certainly, the first venting member 42 may also be disposed on the first step surface 411e.

It can be understood that by providing the through that includes the first subsection 411a, the second subsection 411b, the third subsection 411c, the first step surface 411e, and the second step surface 411f, it is beneficial for the first venting member 42 and the second venting member 43 to be connected in the through hole 411 and for a gas guide channel 41b to be disposed between the first venting member 42 and the second venting member 43.

As shown in Fig. 10, in some optional embodiments, at least part of the first venting member 42 is accommodated in the first subsection 411a, and a gas guide channel 41b is provided between the first venting member 42 and the second venting member 43.

At least part of the first venting member 42 is accommodated in the first subsection 411a, and the first venting member 42 may be disposed in the middle of the first subsection 411a. Since the second venting member 43 is accommodated in the third subsection 411c, the second subsection 411b may be part of the gas guide channel 41b. As such, it is beneficial to realizing the spaced arrangement of the first venting member 42 from the second venting member 43 so as to form the gas guide channel 41b between them.

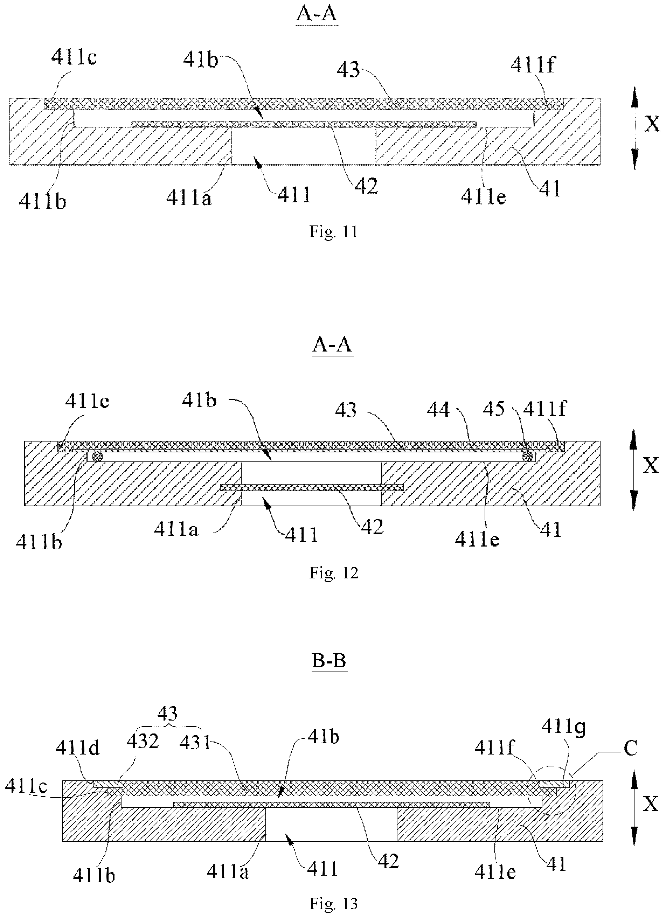

As shown in Fig. 11, in some other optional embodiments, the first venting member 42 is disposed on the first step surface 411e and is spaced apart from the second venting member 43 so that a gas guide channel 41b is formed between the first venting member 42 and the second venting member 43.

The first venting member 42 is disposed on the first step surface 411e to facilitate the connection between the first venting member 42 and the exhaust body 41, and the first venting member 42 is accommodated in the second subsection 411b. The spaced arrangement of the first venting member 42 from a structural member inside the battery cell 30 can be realized using the first subsection 411a, thus reducing the risk of damage to the first venting member 42 by an internal structural member of the battery cell 30 due to a load such as an impact and vibration. Besides, in the presence of the first subsection 411a, the first venting member 42 and electrolyte solution inside the battery cell 30 can be spaced apart, thereby reducing the risk of damage to the first venting member 42 by the electrolyte solution due to contact with the first venting member 42.

As shown in Figs. 8 and 12, in some embodiments, the exhaust device 40 further includes a supporting member 44 and a sealing member 45. The supporting member 44 abuts against a side of the second venting member 43 facing the first venting member 42, and the sealing member 45 abuts and is sandwiched between the supporting member 44 and the first step surface 411e.

Supporting the second venting member 43 by the supporting member 44 reduces the risk of contact between the second venting member 43 and the first venting member 42 due to the deformation and the risk of a failed sealing connection between the second venting member 43 and the exhaust body 41 due to the deformation.

By providing the sealing member 45 that abuts against the supporting member 44 and the first step surface 411e between them, it is beneficial for the realization of a sealing connection between the supporting member 44 and the exhaust body 41, thus realizing a sealing connection between the second venting member 43 and the exhaust body 41.

In some embodiments, the supporting member 44 is in a sheet-like shape and covers one end of the second venting member 43 facing the first venting member 42.

By providing the supporting member 44 in a sheet-like shape, it is beneficial for the reduction of the volume occupied by the supporting member 44, especially a space in the thickness direction X within the through hole 411 occupied by the supporting member 44. By providing the supporting member 44 that covers an end of the second venting member 43 facing the first venting member 42, it is beneficial to provide effective support for the second venting member 43 by the supporting member, thus improving the supporting effect on the second venting member 43.

As shown in Figs. 8, 13, and 14, in some embodiments, the through hole 411 also includes a fourth subsection 411d and a third step surface 411g for connecting the third subsection 411c and the fourth subsection 411d. In a direction perpendicular to the thickness direction X, a size of the fourth subsection 411d is larger than a size of the third subsection 411c. The second venting member 43 includes a venting body 431 and a connecting member 432. The connecting member 432 is in an annular shape. A peripheral edge of the venting body 431 is sealingly connected between the connecting member 432 and the second step surface 411f, and the connecting member 432 abuts against the third step surface 411f and is at least partially accommodated in the fourth subsection 411d.

By providing the through hole 411 that includes a fourth subsection 411d and a third step surface 411g, it is beneficial to provide a connecting member 432 using the fourth step surface, thus improving the connection stability between the connecting member 432 and the exhaust body 41. Accommodating at least part of the connecting member 432 in the fourth subsection 411d facilitates lowering the height of the connecting member 432 protruding from the exhaust body 41, thereby reducing the risk of a failed connection between the connecting member 432 and the exhaust body 41 due to scratch.

In some embodiments, the venting body 431 includes a body region 431a and a deformation region 431b. The deformation region 431b is disposed around a periphery of the body region 431a and is sandwiched between the connecting member 432 and the second step surface 411f. The connecting member 432 abuts against the third step surface 411g, and the deformation region 431b is configured to be compressed and deformed relative to the body region 431a so that the venting body 431 is sealingly connected to the exhaust body 41.

After the deformation region 431b is deformed, its size in the thickness direction X will be smaller than a size of the body region 431a in the thickness direction X. The deformation region 431b is sandwiched between the connecting member 432 and the second step surface 411f and enables the connecting member 432 to abut against the third step surface 411g, thus facilitating the realization of a sealing connection between the second venting member 43 and the exhaust body 41 using the deformation of the deformation region 431b. In addition, since a size difference between the second step surface 411f and the third step surface 411g in the thickness direction X is fixed, the size of the deformation region 431b in the thickness direction X is fixed after deformation, facilitating the improvement of the structural stability of the deformation region 431b and thus the improvement of the connection stability between the second venting member 43 and the exhaust body 41.

Optionally, the connecting member 432 may be positioned inside the fourth subsection 411d or protrude from an end of the exhaust body 41 facing away from the electrode assembly 32 in the thickness direction X.

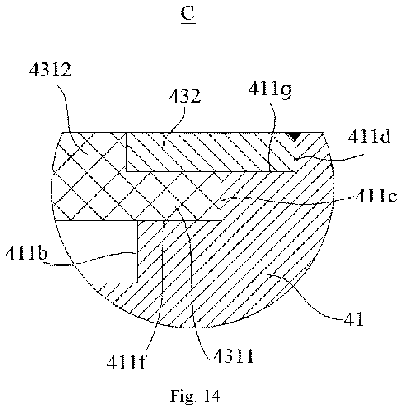

The connecting member 432 and the exhaust body 41 can be connected in any suitable manner. For example, as shown in Fig. 14, the connecting member 432 is connected to the exhaust body 41 by welding.

On the same principle, a surface of the body region 431a facing away from the first venting member 42 may be blown with or protrude from a surface of the connecting member 432, which may be selected according to actual needs.

In some embodiments, any two surfaces among a surface of the connecting member 432 facing away from the first venting member 42, a surface of the body region 431a facing away from the first venting member 42, and a surface of the exhaust body 41 facing away from the electrode assembly 32 of the battery cell 30 are flush with each other.

Such arrangement facilitates the improvement of the flatness of a surface on a side of the exhaust body 41 and the first venting member 42 facing away from the electrode assembly 32 after the first venting member 42 is connected to the exhaust body 41, which thus reduces the risk of damage to the first venting member 42 or the exhaust body 41 due to scratch, thereby further improving the safety performance of the battery cell 30.

The battery cell 30 provided according to the embodiments of this application includes a casing 311, an electrode assembly 32, an end cover 312, and an exhaust device 40 provided in any one of the above embodiments. The casing 311 has an opening 311a, the electrode assembly 32 is accommodated in the casing 311, the end cover 312 covers and encloses the opening 311a of the casing 311, and the exhaust device 40 is disposed on the casing 311 or on the end cover 312.

Optionally, the exhaust device 40 may be disposed on the casing 311 or the end cover 312 as needed. Certainly, the exhaust device 40 may be disposed on both the casing 311 and the end cover 312.

The battery cell 30 provided in the embodiments of this application uses the exhaust device 40 provided in any one of the above embodiments and thus has the same technical effect, which will not be repeated herein.

The battery 10 provided according to the embodiments of this application includes the battery cell 30 provided in the above embodiments.

The battery 10 provided in the embodiments of this application uses the battery cell 30 provided in the above embodiments and thus has the same technical effect, which will not be repeated herein.

The electricity-consuming device provided according to the embodiments of this application includes the battery 10 provided in the above embodiments, which is configured to provide electric energy.

The electricity-consuming device provided by the embodiments of this application uses the battery 10 provided by the embodiments of this application and thus has the same technical effect, which will not be repeated herein.

It should be noted that, in the absence of conflicts, the embodiments and features in the embodiments in this application may be mutually combined.

Finally, it should be noted that the above embodiments are merely intended for describing rather than limiting the technical solutions of this application. Although this application is described in detail with reference to the foregoing embodiments, it should be understood by those of ordinary skills in the art that the technical solutions recorded in the foregoing embodiments may still be modified, or some of the technical features thereof may be equivalently substituted. Such modifications or replacements shall not make the essence of the corresponding technical solution depart from the gist and scope of the technical solutions of the embodiments of this application.

## Claims

1. An exhaust device for a battery cell, comprising:
an exhaust body;
a first venting member disposed on the exhaust body;
a second venting member disposed on the exhaust body, the second venting member disposed on a side of the first venting member in a thickness direction of the exhaust body, and the first venting member and the second venting member configured to allow gas to pass through when gas pressure in the battery cell reaches a first threshold.

2. The exhaust device according to claim 1, wherein the first venting member and the second venting member are spaced apart in the thickness direction so that a gas guide channel is formed between the first venting member and the second venting member, and the gas is discharged to an exterior of the battery cell through the gas guide channel.

3. The exhaust device according to claim 2, wherein a distance d between the first venting member and the second venting member in the thickness direction of the exhaust body satisfies a relationship of d≥2mm.

4. The exhaust device according to any one of claims 1 to 3, wherein the second venting member is disposed on a side of the first venting member facing away from an electrode assembly of the battery cell, and the exhaust body is provided with a groove recessed toward the electrode assembly on a side facing away from an interior of the battery cell, and at least part of the second venting member is accommodated in the groove.

5. The exhaust device according to claim 4, wherein the second venting member comprises a venting body and a connecting member, and the connecting member is sealingly connected to the exhaust body and the venting body.

6. The exhaust device according to claim 5, wherein a material of the venting body comprises fluorine rubber, polypropylene, silicone rubber, ethylene propylene rubber, nitrile rubber, ethylene-propylene-diene monomer rubber, polyurethane rubber, chloroether rubber, or acrylate rubber.

7. The exhaust device according to claim 5 or 6, wherein the connecting member is in an annular shape, the venting body is in a sheet-like shape, and a peripheral edge of the venting body is pressed by and sandwiched between the connecting member and the exhaust body.

8. The exhaust device according to claim 7, wherein the venting body comprises a body region and a deformation region which is disposed around a periphery of the body region, and the deformation region is sandwiched between the connecting member and the exhaust body and is configured to deform relative to the body region under a pressure of the connecting member and the exhaust body so that the venting body is sealingly connected to the exhaust body.

9. The exhaust device according to any one of claims 1 to 8, wherein the exhaust body comprises a through hole extending in the thickness direction, the through hole is communicated with an interior of the battery cell, and the first venting member covers the through hole so that the gas is discharged to an exterior of the battery cell through the through hole.

10. The exhaust device according to claim 9, wherein the second venting member covers the through hole and is spaced apart from the first venting member so that a gas guide channel is formed between the first venting member and the second venting member, and the gas is discharged to the exterior of the battery cell through the gas guide channel.

11. The exhaust device according to claim 10, wherein the through hole comprises a first subsection, a second subsection, and a third subsection arranged in sequence in the thickness direction away from an electrode assembly of the battery cell, a first step surface for connecting the first subsection and the second subsection, and a second step surface for connecting the second subsection and the third subsection, and at least part of the second venting member is accommodated in the third subsection;
at least part of the first venting member is accommodated in the first subsection, and the gas guide channel is disposed between the first venting member and the second venting member; or
the first venting member is disposed on the first step surface and spaced apart from the second venting member so that the gas guide channel is formed between the first venting member and the second venting member.

12. The exhaust device according to claim 11, wherein the exhaust device further comprises a supporting member and a sealing member, the supporting member abuts against a side of the second venting member facing the first venting member, and the sealing member abuts against and is sandwiched between the supporting member and the first step surface.

13. The exhaust device according to claim 12, wherein the supporting member is in a sheet-like shape and covers an end of the second venting member facing the first venting member.

14. The exhaust device according to any one of claims 11 to 13, wherein the through hole further comprises a fourth subsection and a third step surface for connecting the third subsection and the fourth subsection, and a size of the fourth subsection is larger than a size of the third subsection in a direction perpendicular to the thickness direction;
the second venting member comprises a venting body and a connecting member which is in an annular shape, a peripheral edge of the venting body is sealingly connected between the connecting member and the second step surface, and the connecting member abuts against the third step surface and is at least partially accommodated in the fourth subsection.

15. The exhaust device according to claim 14, wherein the venting body comprises a body region and a deformation region which is disposed around a periphery of the body region, the deformation region is sandwiched between the connecting member and the second step surface, the connecting member abuts against the third step surface, and the deformation region is configured to compressively deform relative to the body region so that the venting body is sealingly connected to the exhaust body.

16. The exhaust device according to claim 15, wherein any two surfaces among a surface of the connecting member facing away from the first venting member, a surface of the body region facing away from the first venting member, and a surface of the exhaust body facing away from the electrode assembly of the battery cell are flush with each other.

17. A battery cell, comprising:
a casing comprising an opening;
an electrode assembly accommodated in the casing;
an end cover for covering and enclosing the opening of the casing;
the exhaust device according to any one of claims 1 to 16, wherein the exhaust device is disposed on the casing or on the end cover.

18. A battery, comprising the battery cell according to claim 17.

19. An electricity-consuming device, comprising the battery according to claim 18, which is configured to provide electric energy.
